**Europäisches Patentamt**

**European Patent Office**

**Office européen des brevets**

(19)

(11) Veröffentlichungsnummer : **0 027 853**
**B1**

(12) **EUROPÄISCHE PATENTSCHRIFT**

(45) Veröffentlichungstag der Patentschrift :
**21.11.85**

(51) Int. Cl.⁴ : **H 04 L   9/00**

(21) Anmeldenummer : **80104095.7**

(22) Anmeldetag : **15.07.80**

(54) **Verfahren zur Ver- und Entschlüsselung von Daten.**

(30) Priorität : 30.10.79 DE 2943726

(43) Veröffentlichungstag der Anmeldung :
06.05.81 Patentblatt 81/18

(45) Bekanntmachung des Hinweises auf die Patenterteilung : 21.11.85 Patentblatt 85/47

(84) Benannte Vertragsstaaten :
AT CH GB LI NL

(56) Entgegenhaltungen :
US-A- 3 711 645
US-A- 4 157 454

(73) Patentinhaber : ANT Nachrichtentechnik GmbH
Gerberstrasse 33
D-7150 Backnang (DE)

(72) Erfinder : Bitzer, Wolfgang, Dipl.-Ing.
Rechbergstrasse 15
D-7153 Weissach im Tal (DE)

(74) Vertreter : Schickle, Gerhard, Dipl.-Ing.
ANT   Nachrichtentechnik   GmbH   Patent-   und
Lizenzabteilung Gerberstrasse 33
D-7150 Backnang (DE)

## Beschreibung

Die Erfindung betrifft ein Verfahren zur Ver- und Entschlüsselung von Daten, die zwischen Sender und Empfänger übertragen werden, wobei sende- bzw. empfangsseitig die Nachrichtenklartexte durch Verknüpfung mit gleichen, sowohl im Sender als auch im Empfänger gespeicherten Schlüsseln verschlüsselt bzw. wiedergewonnen werden und wobei die Schlüssel auf Sender- und Empfängerseite in gleicher Weise modifiziert werden.

Verschlüsselungsgeräte arbeiten zumeist derart, daß durch einen Schlüsselgenerator eine Bitfolge mit zufallsähnlichen Eigenschaften erzeugt und dann mit dem zu verschlüsselnden Klartext (Klartextbitfolge) zum Kryptogramm verknüpft wird. Bei der Entschlüsselung wird der Verknüpfungsvorgang invers durchgeführt, wobei die gleiche Bitfolge wie bei der Verschlüsselung benötigt wird. Voraussetzung für eine fehlerfreie Entschlüsselung ist deshalb, daß die nach den gleichen Algorithmen arbeitenden Zufallsgeneratoren zur Ver- bzw. Entschlüsselung auf den gleichen Anfangszustand eingestellt werden.

Um zur unbefugten Entzifferung des Chiffrats keine Ansatzpunkte zu liefern, darf innerhalb einer hinreichend langen Periode eine Schlüsselbitfolge nicht wiederholt werden. Die Schlüsselgeneratoren müssen deshalb bei erneuten Betriebsaufnahmen jeweils auf einen neuen Anfangszustand eingestellt werden.

Durch die DE-PS-1 237 366 ist ein Verfahren bekannt geworden, bei dem die Anfangseinstellung der Schlüsselgeneratoren durch Mischung eines festen Grundschlüssels mit einem variablen Schlüssel erzeugt wird. Dabei wird der variable Schlüsselanteil durch den Schlüsselgenerator auf der Sendeseite erzeugt und im Klartext an die Entschlüsselungseinrichtung übertragen.

Bei diesem Verfahren ist nachteilig, daß eine Entschlüsselung des Chiffrats auf der Empfangsseite nicht möglich ist, wenn auch nur ein einziges Bit bei der Übertragung des variablen Schlüssels verfälscht wird. Nachteilig ist weiterhin, daß bei jeder Sendung zusätzlich der variable Schlüssel übertragen werden muß, der bei bekannten Schlüsselalgorithmen aus 30 bis 64 Bit besteht, wodurch eine erhöhte Datenmenge zur Übertragung ansteht. Das wirkt sich um so nachteiliger aus, je kürzer die einzelnen zu verschlüsselnden Nachrichten sind, wie es bei im Zeitmultiplex arbeitenden Schlüsselgeräten, beispielsweise in paketvermittelten Datennetzen, der Fall ist.

Durch die US-PS-4 157 454 ist ein Verfahren bekanntgeworden, bei dem die Ver- bzw. Entschlüsselung durch sequentielle direkte Verknüpfunen von Textsegmenten mit Schlüsselsegmenten erfolgt, wobei jeweils der Schlüssel modifiziert und der modifizierte Schlüssel zur Verknüpfung des nächsten Textsegmentes verwendet wird. Dieses Verfahren ermöglicht zwar die Verschlüsselung beliebig langer Datenblöcke, aber durch die Verwendung des zu verschlüsselnden Klartextes auf der Sendeseite und des zu entschlüsselnden Chiffrats auf der Empfangsseite für die Modifikation des Schlüssels ergibt sich bei einem Übertrangungsfehler eine fehlerhafte Dechiffrierung mit Fehlerfortpflanzung. Außerdem ist das Verfahren auf die Anwendung nur ganz spezieller Chiffrieralgorithmen beschränkt.

Aufgabe der Erfindung ist es daher, ein unaufwendiges Verfahren der eingangs erwähnten Art anzugeben, bei dem unter Anwendung eines beliebigen Chiffrieralgorithmus aber ohne Kaskadierung von Schlüsselgeneratoren der Verschlüsselungsgrad erhöht und eine fehlerfreie Entschlüsselung des Chiffrats ohne Erhöhung bzw. mit unwesentlicher Erhöhung der zu übertragenden Datenmengen ermöglicht werden.

Die Lösung erfolgt durch die im Kennzeichen des Patentanspruchs 1 angegebenen Merkmale.

Schlüsselgeräte, die nach dem erfindungsgemäßen Verfahren arbeiten, lassen sich vorteilhaft in paketvermitelten Datennetzen bzw. in Zeitmultiplexbetriebsweise einsetzen.

Bei der Erfindung ist weiterhin von Vorteil, daß bei erhöhtem Verschlüsselungsgrad die gesamte zu übermittelnde Datenmenge die Datenmenge des Chiffrats nicht oder kaum übersteigt, wobei jederzeit eine fehler-freie Entschlüsselung möglich ist. Dies wird dadurch erreicht, daß allein der sowohl im Ver- als auch im Entschlüsselungsgerät gespeicherte Schlüssel nach Modifizieren desselben zur Anfangseinstellung der Schlüsselgeneratoren vor oder bei jeder Betriebsaufnahme (Einphasung) einer verschlüsselten Datenübertragung benutzt wird. Dabei muß nicht unbedingt der ganze Schlüssel dieser Modifizierung unterworfen werden, sondern es genügt auch, nur einen Teil desselben zu verwenden. Der für die Modifikation verwendete Algorithmus sollte eine möglichst 1nage Periode aufweisen. Dies kann vorteilhaft durch jeweiliges Weiterzählen des Schlüssels oder durch jeweiliges Aufaddieren einer ungeraden Zahl modulo $2^n$, wobei n kleiner oder gleich der Bitanzahl des Schlüssels ist, erreicht werden. Eine weitere vorteilhafte Modifikation besteht in einem Schlüsselvorgang, bei dem der neue Schlüssel aus dem alten hervorgeht. Hierbei läßt sich zwar die genaue Periode nicht mehr angeben, aber der Vorteil liegt darin, daß sich der alte Schlüssel aus dem jeweils neuen nicht mehr zurückrechnen läßt.

Durch das erfindungsgemäße Verfahren erübrigt sich also die Übermittlung des Anfangseinstellungswertes. Vielmehr ist nur die phasenrichtige Synchronisation der Schlüsselgeneratoren auf den Zeitpunkt des Beginns der verschlüsselten Datenübertragung bzw. auf den Zeitpunkt des Eintreffens oder der Verarbeitung des Synchronisationszeichens beim Emfänger erforderlich.

Um die Wahrscheinlichkeit, daß bei Sender und Empfänger die gleiche Modifikation bzw. das gleiche Modifikationsergebnis auch bei Störungen auf der Übertragungsleitung oder bei anderen Beeinflussungen vorliegt, zu erhöhen, ist es vorteilhaft, vor oder bei der Einphasung beispielsweise eine laufende Nummer an den Empfänger zu übertragen, die angibt, wieviele Modifikationen bereits durchgeführt wurden, oder welche die Adresse der laufenden aktuellen Modifikation enthält. Dadurch ist es dem Empfänger möglich, eine entsprechende Korrektur, falls notwendig, durchzuführen. Es genügt dabei, die laufende Nummer bzw. die Adresse modulo m zu übertragen, wobei m beispielsweise gleich $2^3 = 8$ ist. In diesem Fall würde sich also die jeweils zur Schlüsselsynchronisierung zu übertragende Information von den weiter oben erwähnten 30 bis 64 Bit des variablen Schlüssels auf 3 Bit, also mindestens um den Faktor 10, reduzieren.

Bei vielen Datenübertragungsprozeduren, beispielsweise bei der Paketvermittlung gemäß CCITT-Empfehlung X.25, ist eine laufende Numerierung der einzelnen Datenpakete vorgesehen. Diese Paketnumerierung kann vorteilhaft für die Modifikationssynchronisierung mitbenutzt werden, wobei jedem Paket bzw. jedem Adressaten ein gesonderter Schlüssel zugeordnet wird. Dann ist keine zusätzliche Information zur laufenden Synchronisierung der Schlüsselalgorithmen zu übertragen.

Eine andere Ausgestaltung der Erfindung besteht in einer probeweisen Entschlüsselung eines vereinbarten Testtextes mit bekanntem Inhalt, wobei nach einem Mißerfolg der Empfänger die Modifikation des Schlüssels so lange wiederholt, bis ein positives Ergebnis vorliegt.

Das erfindungsgemäße Verfahren läßt sich vorteilhaft bei offline-Verschlüsselung einsetzen, wobei an die Stelle der Übertragungsleitung oder zusätzlich dazu für eine kurzfristige Zwischenspeicherung ein Datenspeicher eingesetzt wird.

In einer weiteren Ausgestaltung der Erfindung, die vorteilhaft ist bei Betrieb der Schlüsselgeräte im Zeitmultiplex mit mehreren Adressaten, die über vorzugsweise verschiedene Grundschlüssel verfügen, werden die Schlüssel aller Adressaten in einem Mehrfachschlüsselspeicher (vorzugsweise elektronisch) abgespeichert. Vor jeder verschlüsselten Übertragung mit einem der Adressaten wird der zugehörige Schlüssel aus dem Mehrfachschlüsselspeicher ausgelesen und nach entsprechender Modifikation wieder zurückgespeichert, wobei jeweils die aktuelle Anzahl der Modifikationen des entsprechenden Schlüssels zusätzlich abgespeichert wird.

## Patentansprüche

1. Verfahren zur Ver- und Entschlüsselung von Daten, die zwischen Sender und Empfänger werden, wobei sende- bzw. empfangsseitig die Nachrichtenklartexte durch Verknüpfung mit gleichen, sowohl im Sender als auch im Empfänger gespeicherten Schlüsseln verschlüsselt bzw. wiedergewonnen werden und wobei die Schlüssel auf Sender- und Empfängerseite in gleicher Weise modifiziert werden, dadurch gekennzeichnet, daß die Verknüpfung durch Schlüsseltexte erfolgt, die durch Schlüsselgeneratoren jeweils mit Hilfe des das Programm der Schlüsselgeneratoren festlegenden Schlüssels erzeugt werden, daß dem Algorithmus zur Auswahl bzw. Durchführung der Modifikation allein der Schlüssel unabhängig vom Inhalt der übertragenen Daten unterzogen ist, und daß der so modifizierte Schlüssel als neuer Schlüssel für die beliebige Dauer der folgenden verschlüsselten Übertragung verwendet wird, daß bei Sender und Empfänger die Anzahl der erfolgten Modifikationen aufsummiert oder jeder Modifikation eine Adresse zugeordnet wird und daß dem Empfänger die Modifikationsadresse bzw. -anzahl übermittelt wird.

2. Verfahren nach Anspruch 1, dadurch gekennzeichnet, daß die Übermittlung modulo m erfolgt, wobei m eine vereinbarte Zahl ist.

3. Verfahren nach Anspruch 1 oder 2, dadurch gekennzeichnet, daß die Übermittlung mittels Blockadresse, z. B. nach CCITT X.25 erfolgt.

4. Verfahren nach Anspruch 1 oder 2, dadurch gekennzeichnet, daß die Übermittlung beim Aufbau der Datenverbindung erfolgt.

5. Verfahren nach Anspruch 4, dadurch gekennzeichnet, daß die Übermittlung von der zuständigen Vermittlungsstelle des Senders aus und auch an letzterem erfolgt.

6. Verfahren nach einem der vorhergehenden Ansprüche, dadurch gekennzeichnet, daß die Modifikation einen Algorithmus verwendet, der eine Periode von $2^n$ aufweist, wobei n kleiner oder gleich der Bitanzahl des Schlüssels ist.

7. Verfahren nach Anspruch 6, dadurch gekennzeichnet, daß die Modifikation aus einer modulo $2^n$-Addition einer vereinbarten ungeraden Zahl besteht.

8. Verfahren nach einem der vorhergehenden Ansprüche, dadurch gekennzeichnet, daß die Modifikation einen Zählalgorithmus verwendet.

9. Verfahren nach einem der Ansprüche 1 bis 6, dadurch gekennzeichnet, daß die Modifikation aus einem Schlüsselvorgang besteht.

10. Verfahren nach einem der Ansprüche 1 bis 8, dadurch gekennzeichnet, daß die Modifikation vor der Synchronisation der Schlüsselgeneratoren erfolgt.

11. Verfahren nach einem der Ansprüche 1 bis 10, gekennzeichnet durch die Verwendung eines Speichers, in den eine Anzahl Schlüssel und/oder die aktuellen Modifikationen dieser Schlüssel bzw. die Modifikationsadressen oder -anzahlen einspeicherbar sind.

## Claims

1. Method for the encoding and decoding of data which are transmitted between transmitter and receiver, wherein the communications texts in clear at the transmitting end and at the receiving end are respectively encoded and regained through logical interlinking with like codes stored in the transmitter as well as also in the receiver and wherein the codes at the transmitting end and at the receiving end are modified in like manner, characterised thereby, that the logical interlinking takes place through code texts which are generated by code generators each time with the aid of codes determining the program of the code generators, that the algorithm for the selection or performance of the modification is subjected solely to the code independently of the content of the transmitted data and that the code thus modified is employed as new code for the arbitrary duration of the following encoded transmission, that the number of the modifications that have taken place are totalled at transmitter and receiver or an address is associated with each modification and that the address of the modification or the number of modifications is transmitted to the receiver.

2. Method according to claim 1, characterised thereby, that the transmission takes place in modulo m, wherein m is an agreed number.

3. Method according to claim 1 or 2, characterised therby, that the transmission takes place by means of block address, for example according to CCITT X.25.

4. Method according to claim 1 or 2, characterised thereby, that the transmission takes place during the build-up of the data connection.

5. Method according to claim 4, characterised thereby, that the transmission takes place from the appertaining exchange of the transmitter and also at the latter.

6. Method according to one of the preceding claims, characterised thereby, that the modification employs an algorithm which displays a period of $2^n$, wherein n is smaller than or equal to the bit number of the code.

7. Method according to claim 6, characterised thereby, that the modification consists of a modula $2^n$ addition of an agreed odd number.

8. Method according to one of the preceding claims, characterised thereby, that the modification employs a counting algorithm.

9. Method according to one of claims 1 to 6, characterised thereby, that the modification consists of a code operation.

10. Method according to one of the claims 1 to 8, characterised thereby, that the modification takes place before the synchronisation of the code generators.

11. Method according to one of the claims 1 to 10, characterised by the employment of a storage device, into which a number of codes and/or the actual modifications of these codes or the addresses of the modifications or the numbers of the modifications are enterable.

**Revendications**

1. Procédé pour coder et décoder des données qui sont transmises entre un émetteur et un récepteur, selon lequel, côté émission ou côté réception, les messages en texte en clair sont codés ou décodés par enchaînement avec des codes identiques, mémorisés à la fois dans l'émetteur et dans le récepteur, et selon lequel les codes sont modifiés de la même manière côté émetteur et côté récepteur, caractérisé en ce que l'entraînement s'effectue par des textes de code qui sont produits par des générateurs de codes, chaque fois à l'aide du code fixant le programme des générateurs de codes, que seul le code, indépendamment du contenu des données transmises, est soumis à l'algorithme pour la sélection ou la éalisation de la modification, que le code ainsi modifié est utilsé comme nouveau code pour la durée, quelle qu'elle soit, de la transmission codée suivante, que les modifications effectuées sont totalisées en nombre côté émetteur et côté récepteur, ou qu'une adresse est conjuguée à chaque modification, et que l'adresse de la modification respectivement le nombre des modifications sont transmis au récepteur.

2. Procédé selon la revendication 1, caractérisé en ce que la transmission s'effectue modulo m, où m est un nombre convenu.

3. Procédé selon la revendication 1 ou 2, caractérisé en ce que la transmission s'effectue au moyen d'une adresse de bloc, par exemple selon CCITT X.25.

4. Procédé selon la revendication 1 ou 2, caractérisé en ce que la transmission s'effectue à l'établissement de la liaison de données.

5. Procédé selon la revendication 4, caractérisé en ce que la transmission s'effectue à partir du point de commutation concerné de l'émetteur et également à ce dernier.

6. Procédé selon une des revendications précédentes, caractérisé en ce que la modification utilise un algorithme qui présente une période de $2^n$, n étant inférieur ou égal au nombre de bits du code.

7. Procédé selon la revendication 6, caractérisé en ce que la modification consiste en une addition modulo $2^n$ d'un nombre impair convenu.

8. Procédé selon une des revendications précédentes, caractérisé en ce que la modification utilise un algorithme de comptage.

9. Procédé selon une des revendications 1 à 6, caractérisé en ce que la modification consiste en un processus de codage.

10. Procédé selon une des revendications 1 à 8, caractérisé en ce que la modification s'effectue avant la synchronisation des générateurs de codes.

11. Procédé selon une des revendications 1 à 10, caractérisé par l'utilisation d'une mémoire dans laquelle peuvent être mémorisés un certain nombre de codes et/ou les modifications actuelles de ces codes, respectivement les adresses ou les nombres des modifications.